# EUROPÄISCHE PATENTSCHRIFT

(11) **EP 3 233 373 B1**
(45) Veröffentlichungstag und Bekanntmachung des Hinweises auf die Patenterteilung: **08.07.2020**
(21) Anmeldenummer: 15813002.1
(22) Anmeldetag: 10.12.2015
(51) Int. Cl.: B24B 33/10

(54) **WERKSTÜCKHALTEVORRICHTUNG**
WORKPIECE HOLDING DEVICE
DISPOSITIF DE SUPPORT DE PIÈCE

(30) Priorität: 16.12.2014 DE 102014226061
(43) Veröffentlichungstag der Anmeldung: 25.10.2017
(73) Patentinhaber: KADIA Produktion GmbH + Co., 72622 Nürtingen (DE)
(72) Erfinder: REGLER, Roland, 91166 Georgensgmünd (DE)
(74) Vertreter: Patentanwälte Ruff, Wilhelm, Beier, Dauster & Partner mbB
(86) Internationale Anmeldenummer: PCT/EP2015/079268
(87) Internationale Veröffentlichungsnummer: WO 2016/096606

(56) Entgegenhaltungen:
- DE-A1- 19 913 458
- DE-A1-102012 211 840
- DE-U1- 29 602 486

## Beschreibung

Die Erfindung betrifft eine Werkstückhaltevorrichtung gemäß dem Oberbegriff von Anspruch 1. Ein bevorzugtes Anwendungsgebiet ist die Halterung von Werkstücken bei der Honbearbeitung.

Das Honen ist ein Zerspanungsverfahren mit geometrisch unbestimmten Schneiden, bei dem ein Honwerkzeug eine aus zwei Komponenten bestehende Schnittbewegung ausführt und eine ständige Flächenberührung zwischen einem oder mehreren Schneidstoffkörpern des Honwerkzeugs und der zu bearbeitenden Bohrungsinnenfläche des zu bearbeitenden Werkstücks vorliegt. Die Kinematik eines aufweitbaren Honwerkzeugs ist charakterisiert durch eine Überlagerung einer Drehbewegung, einer in Axialrichtung der Bohrung verlaufenden, oszillierenden Hubbewegung und einer Aufweitbewegung, die zu einer Veränderung des wirksamen Durchmessers des Honwerkzeugs führt. An der Bohrungsinnenfläche ergibt sich in der Regel eine Oberflächenstruktur mit sich überkreuzenden Bearbeitungsspuren. Durch Honen endbearbeitete Oberflächen können extrem hohen Anforderungen bezüglich Maß- und Formtoleranzen genügen, so dass viele hoch belastete Gleitflächen in Motoren oder Motorbauteilen, z.B. Zylinderlaufflächen in Motorblöcken oder Bohrungsinnenflächen in Gehäusen von Einspritzpumpen, durch Honen bearbeitet werden.

Bei präzise vorbearbeiteten Werkstücken wird davon ausgegangen, dass Ausrichtung und Lage der Bohrung im Werkstück durch die vorhergehenden Fertigungsschritte, beispielsweise einen Bohrvorgang, ausreichend genau festgelegt sind. Dem Honen kommt dann im Wesentlichen die Aufgabe zu, Geometriefehler im Bohrungsbereich zu beseitigen, die Oberflächenqualität zu verbessern und die Einhaltung enger Maßtoleranzen zu gewährleisten.

Werkstücke dieser Art können kardanisch gehalten und mit Honwerkzeugen bearbeitet werden, die starr mit der Arbeitsspindel der Bearbeitungsmaschine verbunden sind. Eine gattungsgemäße Kardanvorrichtung dient zur Aufnahme eines Werkstückhalters, der mittels der Kardanvorrichtung um zwei zueinander senkrechte Kardanachsen schwenkbar ist. Der Werkstückhalter ist dazu ausgebildet, mindestens ein zu bearbeitendes Werkstück zu halten, welches mit einem Werkzeug, insbesondere einem Honwerkzeug, bearbeitet werden soll.

Die Kardanachsen definieren eine sogenannte Kardanebene, die im Wesentlichen senkrecht zu einer normalerweise vertikalen Spindelachse der Arbeitsspindel ausgerichtet ist. Zusätzlich zu den Schwenkbewegungen um die Kardanachsen kann das aufgenommene Werkstück in der Regel auch kleine Querbewegungen quer zur Spindelachse ausführen, um das Werkstück gegenüber der mit der Spindelachse zusammenfallenden Werkzeugachse frei beweglich zu halten. Das Werkstück ist am Werkstückhalter lediglich gegen Verdrehen und Bewegung in Achsrichtung gesichert. Die mehrachsig bewegliche Aufnahme des Werkstückes ermöglicht beim Honen eine gleichachsige Bearbeitung der zu bearbeitenden Bohrungen, wobei das bewegliche Werkstück durch das an der Arbeitsspindel fest eingespannte Werkzeug ausgerichtet wird. Die kardanische Werkstückhalterung kann dazu beitragen, dass beim Bearbeiten möglichst wenig äußerer Zwang auf das Werkstück einwirkt.

Die DE 19913453 A1 und die DE 19913458 A1 zeigen Beispiele für gattungsgemäße Werkstückhaltevorrichtungen.

Zur Optimierung der Wirtschaftlichkeit und Qualität von Honverfahren werden zunehmend hochdynamische Direktantriebe für Hub und Rotation eingesetzt, die eine Honbearbeitung mit hohen Hubgeschwindigkeiten (zurzeit beispielsweise bis ca. 100 m/min) und Drehzahlen (zurzeit beispielsweise bis ca. 5000 U/min) ermöglichen. Es besteht Bedarf an Werkstückhaltevorrichtungen, die auch unser sehr dynamischen Arbeitsbedingungen den angestrebten Zweck erfüllen.

### AUFGABE UND LÖSUNG

Es ist eine Aufgabe der Erfindung, eine gattungsgemäße Werkstückhaltevorrichtung so weiterzubilden, dass bei Verwendung der Werkstückhaltevorrichtung Bohrungen auch bei sehr dynamischen Arbeitsbedingungen mit hoher Präzision gehont werden können.

Zur Lösung dieser Aufgabe stellt die Erfindung eine Werkstückhaltevorrichtung mit den Merkmalen von Anspruch 1 bereit. Vorteilhafte Weiterbildungen sind in den abhängigen Ansprüchen angegeben. Der Wortlaut sämtlicher Ansprüche wird zur Bezugnahme zum Inhalt der Beschreibung gemacht.

Die Kardanvorrichtung weist einen ersten Kardanhalter auf, welcher gegenüber einer Lagereinrichtung der Werkstückhaltevorrichtung um eine erste Kardanachse schwenkbar ist. Der erste Kardanhalter trägt in montiertem Zustand der Kardanvorrichtung einen zweiten Kardanhalter, der gegenüber dem ersten Kardanhalter um eine zweite Kardanachse schwenkbar ist, die senkrecht zur ersten Kardanachse ausgerichtet ist. Dadurch ist der zweite Kardanhalter gegenüber der Lagereinrichtung der Werkstückhaltevorrichtung um zwei zueinander senkrechte Kardanachsen schwenkbar. Ein Werkstückhalter, der zum Einspannen mindestens eines Werkstücks für die Bearbeitung dient, kann als gesondertes Bauteil ausgeführt sein, welches fest am zweiten Kardanhalter montiert ist. Der zweite Kardanhalter kann auch selbst als Werkstückhalter dienen bzw. als Werkstückhalter ausgeführt sein, so dass kein gesonderter Werkstückhalter nötig ist.

Gemäß der beanspruchten Erfindung weist der erste Kardanhalter und/oder der zweite Kardanhalter mindestens eine Komponente auf, die unter Verwendung eines Faserverbundwerkstoffs hergestellt ist. Der erste Kardanhalter und/oder der zweite Kardanhalter bestehen somit mindestens teilweise aus Faserverbundwerkstoff.

Durch die Verwendung eines Faserverbundwerkstoffs für die Herstellung einer oder mehrerer struktureller Komponenten eines Kardanhalters ist es möglich, das Gewicht und die Massenträgheit der entsprechenden Komponente im Vergleich zu einer ähnlich gestalteten Komponente aus einem metallischen Werkstoff (z.B. Stahlwerkstoff oder Aluminiumwerkstoff) erheblich zu reduzieren. Gleichzeitig kann durch Verwendung eines Faserverbundwerkstoffs eine für die Werkstückhaltefunktion ausreichende Steifigkeit der entsprechenden Komponente erhalten werden. Durch die Verwendung eines Faserverbundwerkstoffs im Rahmen der Herstellung eines oder mehrerer Kardanhalter können diese Bauteile bei ausreichender Stabilität so hergestellt werden, dass für die Ausrichtung während der Werkstückbearbeitung auch bei schnellen Ausrichtbewegungen bereits geringe Kräfte ausreichen, so dass umgekehrt auch nur geringe Zwangskräfte von der Werkstückhaltevorrichtung auf das Werkstück ausgeübt werden. Durch die Reduzierung der Massenträgheit der Komponente ist eine leichte und präzise Ausrichtung des Werkstücks in Bezug auf das Werkzeug auch bei hohem Bearbeitungsgeschwindigkeiten und entsprechend hohen Beschleunigungen bei den Ausrichtungsbewegungen möglich. Dies führt zu qualitativ besseren Honergebnissen als bei Verwendung konventioneller Werkstückhaltevorrichtungen, die aufgrund der verwendeten metallischen Materialen bei etwa gleichen Dimensionen vergleichsweise träger reagieren.

Komponenten, die unter Verwendung (mindestens) eines Faserverbundwerkstoffs hergestellt werden, können ausreichend Steifigkeit und gute Dämpfung bei sehr geringer Masse bieten. Die Reduktion der Massenträgheit bewegter Komponenten der Werkstückhalterung durch Verwendung von Faserverbundwerkstoffen kann dazu beitragen, Maschinen für zunehmend dynamischer Honprozesse in Verbindung mit ebenfalls stetig steigenden Anforderungen an die Bearbeitungsgenauigkeit beim Honen zu ertüchtigen.

Vorzugsweise wird als Faserverbundwerkstoff ein carbonfaserverstärkter Kunststoff (CFK) verwendet, der auch als kohlenstofffaserverstärkter Kunststoff (KFK) bezeichnet werden kann. Bei einem derartigen Faserverbundwerkstoff sind Kohlestofffasern in einer Matrix aus Kunststoff (beispielsweise einem Epoxidharz, einem anderen Duromer oder einem Thermoplast) eingebettet. Dabei profitieren die mechanischen Eigenschaften des ausgehärteten Faserverbundwerkstoffs von der Zugfestigkeit der Kohlenstofffasern. Die Kunststoff-Matrix verhindert, dass sich die Fasern unter Belastung gegeneinander verschieben und trägt außerdem zu den Dämpfungseigenschaften des Materials bei. Alternativ oder zusätzlich ist es z.B. auch möglich, als Faserverbundwerkstoff einen glasfaserverstärkten Kunststoff (GFK) zu verwenden. Bei der Herstellung eines Kardanhalters können zwei oder mehr Faserverbundwerkstoffe unterschiedlichen Typs kombiniert werden.

Gemäß einer Weiterbildung weist die unter Verwendung eines Faserverbundwerkstoffs hergestellte Komponente einen Kern geringer Massendichte auf, der durch eine Hülle aus Faserverbundwerkstoff umschlossen ist. Als Kern kann ein druckstabiles Leichtbauteil verwendet werden. Beispielsweise können Hohlkörper aus Glas oder einem anderen leichten Material zum Aufbau des Kerns genutzt werden, so dass dieser eine Matrix aus stabilem Festkörpermaterial aufweist, in welcher Hohlräume eingeschlossen sind. Alternativ oder zusätzlich kann der Kern unter Verwendung von Hartschaum hergestellt werden, der im gehärteten Zustand ebenfalls Hohlräume enthält. Die Massendichte des Kerns bzw. die Massendichte der für den Kern verwendeten Materials (ein Material oder Materialkombination inklusive eventueller Hohlräume) ist vorzugsweise geringer als die Massendichte des Hüllmaterials. Die Hülle aus Faserverbundwerkstoff kann durch geeignete Laminierungstechnik um den Kern herum erzeugt werden. Durch den Aufbau mit leichtem Kern (Leichtbaukern) und umschließender Hülle entsteht eine rohrartige Konstruktion, die im Vergleich zu einer massiven Bauweise gleicher Abmessungen leichter und steifer ausgeführt werden kann.

Für die Gestalt eines Kardanhalters gibt es unterschiedliche Möglichkeiten. Beispielsweise kann ein Kardanhalter nach Art einer Gabel einseitig offen sein. Vorzugsweise sind jedoch der erste Kardanhalter und/oder der zweite Kardanhalter bzw. die jeweils unter Verwendung eines Faserverbundwerkstoffs hergestellte Komponente des Kardanhalters als geschlossener Ring ausgebildet. Ein in Umfangsrichtung geschlossener Ring bietet im Vergleich zu einer einseitig offenen Gestalt nochmals verbesserte Steifigkeit. Außerdem kann durch die ringförmige Ausgestaltung eine relativ gleichmäßige Massenverteilung um das gehaltene Werkstück herum erreicht werden, wodurch die Leichtgängigkeit bei den Ausrichtungsbewegungen verbessert werden kann.

Ein ringförmiger Kardanhalter kann im Wesentlichen kreisrund sein. Gemäß einer Weiterbildung ist vorgesehen, dass ein ringförmiger Kardanhalter eine im Wesentlichen polygonale Gestalt aufweist, also eine Gestalt, bei der in Umfangsrichtung gerade Abschnitte an vorzugsweise gerundeten Ecken bzw. Eckbereichen in benachbarte gerade Abschnitte übergehen. Bei einer Ausführungsform hat der Ring eine im Wesentlichen quadratische Gestalt mit abgerundeten Ecken. Auch andere Rechteckformen sind möglich. An den geraden Abschnitten können Lagerelemente vorgesehen sein, die den Ort und Verlauf der Kardanachsen definieren. Beispielsweise können an einander gegenüberliegenden geraden Abschnitten Lagerelemente angebracht sein.

Den bevorzugten Konstruktionen liegt unter anderem die Erkenntnis zugrunde, dass zentralisierte Massen in der Nähe der zu bearbeiteten Werkstückachse unter dynamischen Arbeitsbedingungen ein weitaus geringeres Problem darstellen als Massen, die weit von der Werkstückachse entfernt liegen, da hier die Massenträgheiten eine entscheidende Rolle spielen. Es wurde erkannt, dass nicht nur die absolute Masse eine Rolle spielt, sondern auch deren Anordnung und Verteilung innerhalb einer Vorrichtung. Kardanvorrichtungen der hier vorgeschlagenen Art können so gestaltet werden, dass sie für aktuelle und zukünftige schnelle Bearbeitungsprozess wichtige Anforderungen wie z.B. (i) zentralisierte Massen, (ii) leichte Grundstrukturen für weiter von der Werkstückachse entfernte Bereiche sowie (iii) in Summe geringe Massenträgheitsmomente erfüllen.

Ein besonderes Augenmerk kann außerdem auf den Materialeinsatz gelegt werden, der auf ein Mindestmaß reduziert werden kann und im Vergleich zu Herstellung von Komponenten mittels spanender Bearbeitung keine prinzipiellen "Materialverluste" mit sich bringt.

Der Einsatz von Faserverbundwerkstoffen, z.B. solchen mit Carbonfasern, ist jedoch heutzutage trotz des geringen Materialeinsatzes noch vergleichsweise teuer. Daher besteht ein weiterer Ansatz der vorliegenden Offenbarung darin, Kardanhalter so weit zu standardisieren, dass ein Baukasten entsteht, der durch die wechselseitige Verwendung von mehreren Baugrößen eine gesamte Vorrichtungsfamilie in verschiedenen Baugrößen ergibt. Dieser Ansatz kann auch unabhängig von der Verwendung von Faserverbundwerkstoffen vorteilhaft sein, z.B. auch bei Kardanhaltern, die durch spanende Bearbeitung hergestellt werden. Dieser Ansatz wird aber nicht beansprucht.

Gemäß diesem Aspekt der Offenbarung wird ein Kardanhalter-Set zur Verwendung bei der Herstellung einer oder mehrerer Kardanvorrichtungen bereitgestellt. Das Kardanhalter-Set umfasst:
einen ersten Kardanhalter mit einer ersten Baugröße;
einen zweiten Kardanhalter mit einer zweiten Baugröße, die sich von der ersten Baugröße unterscheidet, und
mindestens einen dritten Kardanhalter mit einer dritten Baugröße, die sich von der ersten und der zweiten Baugröße unterscheidet,
wobei der erste Kardanhalter so ausgelegt ist, dass er den zweiten Kardanhalter derart tragen kann, dass der zweite Kardanhalter gegenüber dem ersten Kardanhalter um eine zweite Kardanachse schwenkbar ist, und
wobei der dritte Kardanhalter so ausgelegt ist, dass er den ersten Kardanhalter derart tragen kann, dass der erste Kardanhalter gegenüber dem dritten Kardanhalter um eine erste Kardanachse schwenkbar ist.

Die Baugrößen können so aufeinander abgestimmt sein, dass der erste Kardanhalter größer als der zweite Kardanhalter, aber kleiner als der dritte Kardanhalter ist. Ein Kardanhalter erster Art (mit relativ kleinerer Baugröße) kann z. B in der oben beschriebenen Weise durch Zusammenbau des ersten mit dem zweiten Kardanhalter hergestellt werden, wobei der zweite Kardanhalter innerhalb des ersten Kardanhalters angeordnet sein kann.

Andererseits kann der erste Kardanhalter auch dazu verwendet werden, zusammen mit dem relativ größeren dritten Kardanhalter eine Kardanvorrichtung zweiter Art (mit relativ größerer Baugröße) zusammenzubauen, wobei der erste Kardanhalter innerhalb des dritten Kardanhalters angeordnet sein kann. Für den ersten Kardanhalter gibt es somit mindestens zwei Verwendungsmöglichkeiten in Kardanvorrichtungen unterschiedlicher Art bzw. Baugröße. Auch der zweite Kardanhalter kann ggf. in unterschiedlichen Konfigurationen verwendet werden, z.B. als relativ größerer äußerer Kardanhalter einer insgesamt kleineren Kardanvorrichtung.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine schrägperspektivische Darstellung einer Werkstückhaltevorrichtung gemäß einer Ausführungsform der Erfindung;
- Fig. 2: einen Schnitt durch eine unter Verwendung eines Faserverbundwerkstoffs hergestellte ringförmige Komponente des ersten Kardanhalters;
- Fig. 3: eine Draufsicht auf die Werkstückhaltevorrichtung aus Fig. 1;
- Fig. 4: eine Seitenansicht parallel zur zweiten Kardanachse;
- Fig. 5: eine Seitenansicht parallel zur ersten Kardanachse;
- Fig. 6: eine schrägperspektivische Ansicht eines Beispiels einer Vorrichtungsfamilie mit vier Werkstückhaltevorrichtungen in drei unterschiedlichen Baugrößen, die mithilfe von standardisierten Kardanhaltern eines Kardanhalter-Sets zusammengebaut sind; und
- Fig. 7: die Vorrichtungsfamilie aus Fig. 6 in Draufsicht.

### DETAILLIERTE BESCHREIBUNG DER AUSFÜHRUNGSBEISPIELE

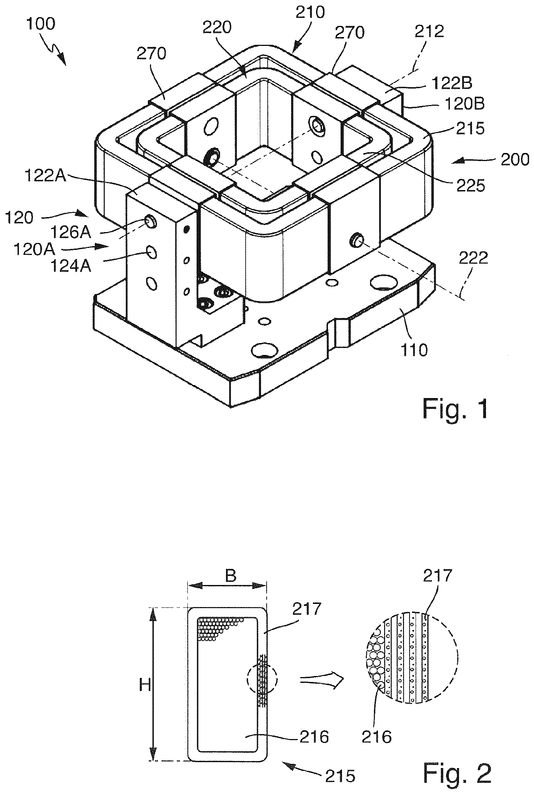

In Fig. 1 ist eine schrägperspektivische Darstellung einer Werkstückhaltevorrichtung 100 gemäß einer Ausführungsform der Erfindung gezeigt. Die Werkstückhaltevorrichtung ist dafür vorgesehen, ein mittels Honen zu bearbeitendes Werkstück (nicht dargestellt) in einer Arbeitsposition zu halten, so dass eine innerhalb des Werkstücks ausgebildete Bohrung mittels Honen bearbeitet werden kann. Die Werkstückhaltevorrichtung erlaubt dabei eine mehrachsige Bewegung des Werkstücks gegenüber dem starr an einer Arbeitsspindel aufgenommenen Honwerkzeug, so dass das Werkstück sich am Honwerkzeug ausrichten kann.

Die Werkstückhaltevorrichtung 100 hat eine mit Befestigungsbohrungen versehene Grundplatte 110, die mittels Schrauben auf einer Tischplatte eines Drehtisches oder als Schiebevorrichtung auf einer Transporteinrichtung innerhalb der Honmaschine, ggf. auch direkt auf dem Maschinenbett der Honmaschine, befestigt werden kann. Auf der Oberseite der Grundplatte sind zwei winkelförmige Trägerelemente 120A, 120B montiert, die jeweils einen senkrecht zur Grundplatte ausgerichteten Trägerabschnitt 122A, 122B haben. Die Trägerabschnitte sind mit einem lichten Abstand zueinander spiegelsymmetrisch zueinander angeordnet und weisen jeweils in drei übereinanderliegenden Ebenen miteinander fluchtende Lagerbohrungen 124A auf. Die Trägerelemente 120A, 120B sind Komponenten einer zur Werkstückhaltevorrichtung gehörenden Lagereinrichtung 120, mit der eine Kardanvorrichtung 200 in der Werkstückhaltevorrichtung aufgenommen wird.

Die Kardanvorrichtung 200 weist einen ersten Kardanhalter 210 auf, der gegenüber der Lagereinrichtung 120 der Werkstückhaltevorrichtung um eine erste Kardanachse 212 verschwenkbar ist. Hierzu sind in den oberen Lagerbohrungen 124A etc. zylindrische Lagerbolzen 126A etc. eingefügt, deren miteinander fluchtende Längsmittelachsen die erste Kardanachse 212 definieren. Der erste Kardanhalter 210 ist an den nach innen herausragenden Abschnitten der Lagerbolzen schwenkbar gelagert und entlang der Lagerbolzen (d.h. parallel zur ersten Kardanachse) begrenzt beweglich.

Eine für die Funktion des ersten Kardanhalters wesentliche Komponente 215 hat die Form eines in Umfangsrichtung geschlossenen Rings mit einer im Wesentlichen quadratischen Gestalt. Die Komponente wird im Folgenden auch als Ring 215 bezeichnet und verleiht dem ersten Kardanhalter insgesamt die Grundform eines quadratischen Rings. Die Komponente 215, also der Ring, ist unter Verwendung eines Faserverbundwerkstoffs, im Beispielsfall carbonfaserverstärktem Kunststoff (CFK), hergestellt. Der äußere und innere Aufbau wird anhand von Fig. 2 näher erläutert, die einen senkrechten Schnitt durch die ringförmige Komponente 215 des ersten Kardanhalters 210 zeigt.

Der Ring hat insgesamt einen hochkant stehenden Rechteckquerschnitt mit einer Höhe H, die mehr als doppelt so groß, insbesondere mehr als dreifach oder mehr als vierfach so groß wie die quer zur Höhe gemessene Breite B ist. Dies verleiht dem Ring vor allem bei Belastungen parallel zur Achsrichtung des Werkzeugs rein durch die Gestaltung des Querschnitts hohe Steifigkeit. Der Ring 215 hat vier paarweise parallel zueinander ausgerichtete gerade Abschnitte, die im Bereich von gerundeten Ecken ineinander übergehen. Jeweils mittig an den geraden Abschnitten ist der Ring von einer Rechteckhülse 270 umschlossen, die als Lagerelement 270 dient, den Ring im umschlossenen Bereich mechanisch verstärkt und jeweils zwei übereinanderliegende Querbohrungen zur Aufnahme von Lagerbolzen aufweist. Eine Rechteckhülse 270 ist hier ein partiell als Vollmaterial ausgeführtes und einlaminiertes CFK-Teil, das lediglich die jeweilige Lagerachse umschließend eine Lagerbuchse aus einem metallischen oder keramischen Werkstoff enthält. Lagerbolzen können z.B. aus einem metallischen oder keramischen Werkstoff oder einer Werkstoffkombination bestehen.

Die Kardanvorrichtung 200 weist einen zweiten Kardanhalter 220 auf, der im Inneren des ringförmigen ersten Kardanhalters 210 angeordnet ist und ebenfalls die Grundgestalt eines in Umfangsrichtung geschlossenen, im Wesentlichen quadratischen Rings hat. Der zweite Kardanhalter 220, der auch als innerer Kardanhalter bezeichnet wird, wird vom ersten Kardanhalter 210, der auch als äußerer Kardanhalter bezeichnet wird, in der Weise getragen, dass der zweite (innere) Kardanhalter gegenüber dem ersten (äußeren) Kardanhalter um eine senkrecht zur ersten Kardanachse 212 ausgerichtete zweite Kardanachse 222 schwenkbar ist. Hierzu haben diejenigen Lagerhülsen 270 des ersten Kardanhalters, die sich an den parallel zur ersten Kardanachse verlaufenden geraden Abschnitten befinden, jeweils miteinander fluchtende Lagerbohrungen, in die Lagerbolzen eingesetzt sind, auf welchen der innere Kardanhalter schwenkbar und entlang der Lagerbolzen (d.h. parallel zur zweiten Kardanachse) begrenzt beweglich gelagert ist.

Der innenliegende zweite Kardanhalter ist dafür konfiguriert, dass ein gesonderter Werkstückhalter darin fest montiert werden kann. Der Werkstückhalter ist dann an die Form und Größe des zu bearbeitenden Werkstücks bzw. der zu bearbeitenden Werkstücke angepasst, welche in den Werkstückhalter axial fest und gegen Verdrehung gesichert eingespannt werden können. Das zu bearbeitende Werkstück ist dadurch gegenüber der Grundplatte bzw. dem Maschinenbett der Honmaschine um zwei zueinander senkrecht verlaufende Achsen (erste und zweite Kardanachse) verschwenkbar. Außerdem ergeben sich auf den Lagerbolzen Freiheitsgrade für eine geringfügige axiale Verschiebung der Ringe auf den Lagerbolzen, so dass auch Querbewegungen ausgeglichen werden können.

Eine wesentliche Komponente des zweiten (inneren) Kardanhalters ist wiederum ein in Umfangsrichtung geschlossener Ring 225, der eine unter Verwendung eines Faserverbundwerkstoffs hergestellte Komponente ist. Die Dimensionen des (inneren) Rings 225 parallel zur ersten Kardanachse und parallel zur zweiten Kardanachse sind jeweils kleiner als die entsprechenden Dimensionen des äußeren ersten Kardanhalters, so dass der innere zweite Kardanhalter so in den Innenraum des äußeren ersten Kardanhalters passt, dass in Radialrichtung ein Zwischenraum von einigen Millimetern verbleibt, der eine relative Schwenkbewegung des zweiten (inneren) Kardanhalters gegenüber dem äußeren ersten Kardanhalter erlaubt. Die Querschnittsdimensionen des inneren Rings 225 entsprechen dagegen den Querschnittsdimensionen des äußeren Rings 215 (vgl. Fig. 2), der innere Ring hat also die gleiche Breite B und Höhe H wie der äußere Ring.

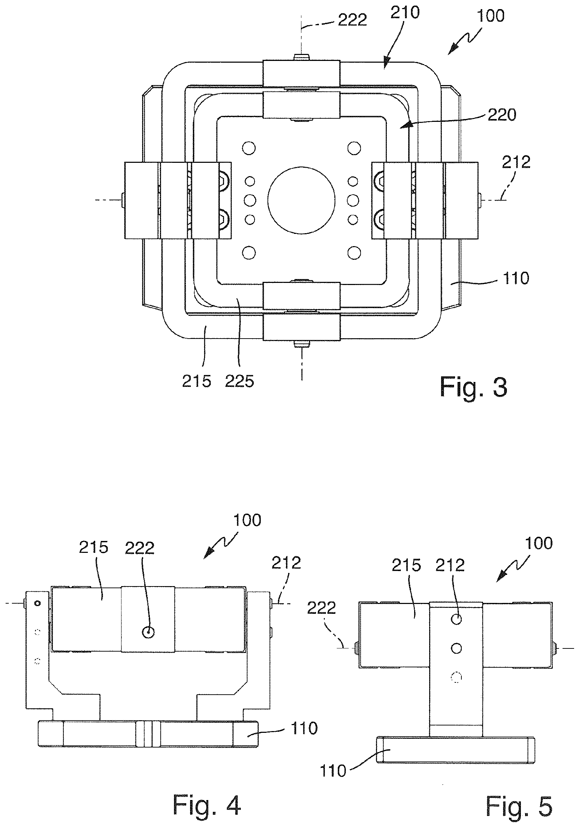

Fig. 3 zeigt eine Draufsicht auf die Werkstückhaltevorrichtung, Fig. 4 eine Seitenansicht parallel zur zweiten Kardanachse und Fig. 5 eine Seitenansicht parallel zur ersten Kardanachse.

Der Ring 215 und der Ring 225 sind jeweils unter Verwendung eines Faserverbundwerkstoffs mit Kohlenstofffasern eingebettet in einer Kunststoffmatrix hergestellt. Der Aufbau wird anhand des Querschnitts in Fig. 2 im Detail erläutert. Die ringförmige Komponente bzw. der Ring 215 besteht im Wesentlichen aus einem Kern 216 mit Rechteckquerschnitt und einer Hülle 217, die den Kern in Umfangsrichtung vollständig umschließt. Bei dem Kern handelt es sich um einen druckstabilen Leichtbaukern mit geringer mittlerer Massendichte, der im Beispielsfall im Wesentlichen aus Miniaturglaskügelchen besteht, die durch ein leichtes Bindemittel zusammengehalten sind. Dieser Kern definiert die quadratische Grundform des Rings und auch seine rechteckige Querschnittsform. Bei der Herstellung wird der Kern dann mittels Laminiertechnik mit Carbonfasern und dem zum Binden der Carbonfasern verwendeten Kunststoff ummantelt, so dass sich nach Aushärtung des faserverstärkten Verbundwerkstoffs eine stabile Hülle 217 ergibt, die den Kern 216 umschließt. Alternativ können auch ein Hartschaum oder sonstige, leichte und formstabile "Füllungen" zur Bildung des Kerns verwendet werden. Maßgabe hierfür ist das geforderte Gewicht, die benötigte Dämpfung und die geforderte Steifigkeit, die durch unterschiedliche dicke Laminierschichten der CFK-Hülle ggf. eine andere Ausführung des Kerns benötigen können.

Durch diesen Aufbau entsteht eine extrem steife Gesamtstruktur innerhalb eines Rings, die nur einen Bruchteil der Masse von bisher verwendeten Materialien (beispielsweise Stahlwerkstoff oder Aluminiumwerkstoff) hat. Der innenliegende Kern ermöglicht hier grundsätzlich eine freie Formgestaltung, die durch das Laminieren mit Carbonfasern und Kunststoff ebenfalls dargestellt werden kann. Ein besonderes Augenmerk kann hierbei auf den Materialeinsatz gelegt werden, der auf ein Mindestmaß reduziert ist und im Vergleich zu spanend bearbeiteten Komponenten gleicher Dimensionen keine Materialverluste mit sich bringt.

Die Werkstückhaltevorrichtung lässt einerseits eine schwimmende Ausgleichsbewegung parallel zu den Kardanachsen zu. Außerdem können eventuelle Winkelfehler durch Schwenkbewegungen um die Kardanachsen ebenfalls ausgeglichen werden, um der maschinenseitig vorgegebenen Achse der Honeinheit exakt folgen zu können. Da es sich hierbei nicht um einen einmaligen, statischen Ausgleich pro Werkstück handelt, sondern durch verschiedene Einflüsse während der jeweiligen Werkstückbearbeitung ein stetiger, dynamischer Ausgleich zwischen Positions- und Winkelabweichungen notwendig ist, muss die Werkstückhaltevorrichtung dies ausgleichen können. Mithilfe der Kardanvorrichtung 200 kann dieser Ausgleich für jegliche zeitliche Situation innerhalb des Bearbeitungszyklus abgebildet werden. Gerade bei hochdynamischen Bearbeitungsprozessen spielt die Masse der zu bewegenden Teile innerhalb einer Vorrichtung eine entscheidende Rolle für das Endergebnis. Hierbei spielt nämlich nicht nur die absolute Masse beweglicher Komponenten eine Rolle, sondern auch deren Anordnung und Verteilung innerhalb einer Vorrichtung. Die Werkstückhaltevorrichtung des Ausführungsbeispiels genügt den Anforderungen an sehr schnelle Bearbeitungsprozesse unter anderem deshalb, weil sie zentralisierte Massen, leichte Grundstrukturen für weiter von der Werkstückachse entfernte Bereiche und in Summe geringe Massenträgheitsmoment mit sich bringt.

Die Verwendung eines oder mehrerer Faserverbundwerkstoffe zur Herstellung von Komponenten von Kardanhaltern einer Kardanvorrichtung für eine Werkstückhaltevorrichtung erscheint auf den ersten Blick teurer als die konventionelle Vorgehensweise, geeignete Komponenten durch spanende Bearbeitung aus einem metallischen Ausgangswerkstück zu fertigen. Durch Standardisierung von Komponenten können jedoch erhebliche Kosteneinsparungen realisiert werden, so dass die tatsächlichen Kosten für die funktionell überlegenen Leichtbau-Kardanhalter die Kosten konventioneller Herstellung nicht entscheidend übersteigen.

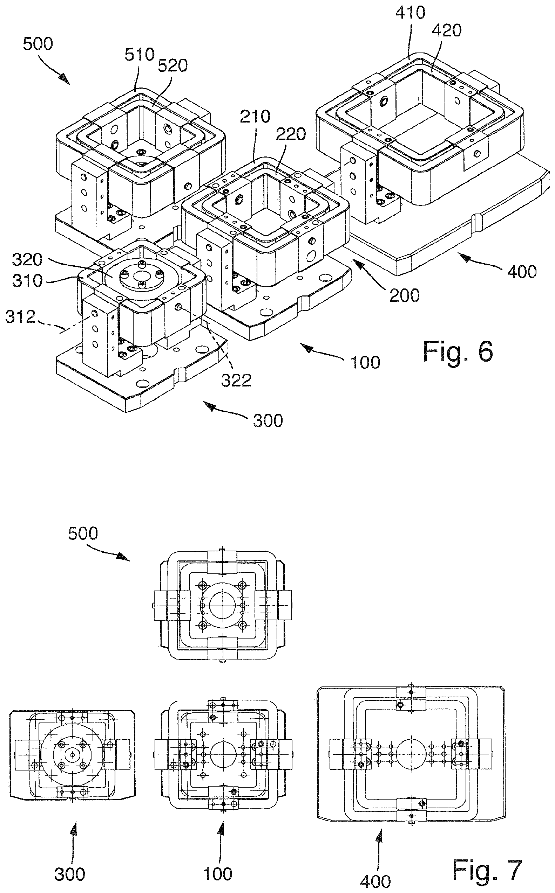

Anhand der Fig. 6 und 7 wird ein Ansatz beschrieben, die für den Aufbau von Kardanvorrichtungen verwendeten Ringe so weit zu standardisieren, dass ein Baukasten entsteht, der durch wechselseitige Verwendung von mehreren Baugrößen eine gesamte Vorrichtungsfamilie in verschiedenen Baugrößen ergibt. Fig. 6 zeigt ein Beispiel für eine mögliche Ausgestaltung einer Vorrichtungsfamilie mit vier Werkstückhaltevorrichtungen in drei unterschiedlichen Baugrößen in Schrägperspektive, Fig. 7 zeigt die gleiche Vorrichtungsfamilie in Draufsicht. Die vier Werkstückhaltevorrichtungen 100, 300, 400 und 500 sind aus unterschiedlich dimensionierten Kardanhaltern eines Kardanhalter-Sets mit standardisierten Größen zusammengesetzt. Die anhand von Fig. 1 beschriebene Werkstückhaltevorrichtung 100 mit Kardanvorrichtung 200 ist in der Mitte nochmals dargestellt. Der erste Kardanhalter 210 mit ringförmiger Komponente 215 dient als äußerer erster Kardanhalter, der an den Trägerelementen der Lagereinrichtung 120 um die erste Kardanachse schwenkbar aufgehängt ist. In seinem Inneren befindet sich der zweite Kardanhalter 220 mit dem Ring 225 als wesentliche tragende Komponente. Der erste Kardanhalter 210 ist hier dasjenige Bauteil der Kardanvorrichtung mit der relativ größeren Baugröße.

Die links gezeigte Werkstückhaltevorrichtung 300 hat eine Kardanvorrichtung, bei der ein äußerer erster Kardanhalter 310 vorgesehen ist, der an den Lagern der Lagereinrichtung um eine erste Kardanachse 312 verschwenkbar ist. Dieser trägt in seinem Inneren einen kreisrunden zweiten Kardanhalter 320, der relativ zum ersten Kardanhalter 310 um eine zweite Kardanachse 322 verschwenkbar ist. In diesem inneren Kardanhalter kann das Werkstück direkt eingespannt werden. Der äußere Kardanhalter (erster Kardanhalter 310) ist bezüglich seines Aufbaus und seiner Baugröße bzw. Dimensionen nominell identisch zum zweiten Kardanhalter 220 der Werkstückhaltevorrichtung 100. Dies zeigt, dass derselbe Kardanhalter oder ein identisch aufgebauter und dimensionierter Kardanhalter innerhalb einer Kardanvorrichtung 200 als relativ kleinerer (innerer) Kardanhalter dienen kann, während der Kardanhalter in einer anderen Kardanvorrichtung (der Werkstückhaltevorrichtung 300) als relativ größerer (äußerer) Kardanhalter dienen kann.

Der Kardanhalter 210, der bei der Werkstückhaltevorrichtung 100 als erster (relativ größerer, äußerer) Kardanhalter verwendet wird, kann zum Zusammenbau bzw. zur Herstellung einer anderen Werkstückhaltevorrichtung als innerer (relativ kleinerer) Kardanhalter verwendet werden. Die Kardanvorrichtung der oben rechts gezeigten, relativ großen Werkstückhaltevorrichtung 400 hat einen äußeren, ersten Kardanhalter 410, dessen Baugröße relativ größer ist als die Baugröße des äußeren (ersten) Kardanhalters 210 der kleiner dimensionierten Werkstückhaltevorrichtung 100. Der im ersten Kardanhalter 410 aufgenommene und von diesem schwenkbar getragene innere zweite Kardanhalter 420 ist nominell identisch zum äußeren ersten Kardanhalter 210 der daneben dargestellten Werkstückhaltevorrichtung 100. Diese Komponente kann also mehrfach verwendet werden, nämlich einmal als relativ größerer äußerer Kardanhalter und ein anderes Mal als relativ kleinerer innerer Kardanhalter.

Die Kardanhalter des Beispiels sind Bestandteil eines Kardanhalter-Sets zur Verwendung bei der Herstellung einer oder mehrerer Kardanvorrichtungen. Der erste Kardanhalter 210 hat eine erste Baugröße. Der zweite Kardanhalter 220 hat eine zweite Baugröße, die sich von der ersten Baugröße unterscheidet, da der zweite Kardanhalter kleiner als der erste ist und in diesen vollständig hineinpasst. Der Kardanhalter 410 ist ein dritter Kardanhalter mit einer dritten Baugröße, die sich von der ersten und der zweiten Baugröße unterscheidet, weil er nämlich größer als der erste Kardanhalter 210 ist. Der erste Kardanhalter 210 ist so ausgelegt ist, dass er den zweiten Kardanhalter 220 derart tragen kann, dass der zweite Kardanhalter gegenüber dem ersten Kardanhalter um eine zweite Kardanachse 222 schwenkbar ist. Der dritte Kardanhalter 410 ist so ausgelegt, dass er den ersten Kardanhalter 210 derart tragen kann, dass der erste Kardanhalter gegenüber dem dritten Kardanhalter um eine erste Kardanachse schwenkbar ist.

Es kann also beispielsweise ein Außenring mittlerer Größe als Innenring einer großen Baugröße verwendet werden. Gleichermaßen ist es möglich, dass zum Beispiel ein Innenring einer Vorrichtung mittlerer Größe wiederum als Außenring einer Vorrichtung kleinerer Baugröße verwendet werden kann. Durch die Standardisierung und geeignete Staffelung von Kardanhaltern unterschiedlicher Baugrößen können die Herstellungskosten für die gesamte Familie von Werkstückhaltevorrichtungen trotz Verwendung relativ teurer Faserverbundwerkstoffe moderat gehalten werden. Im Beispielsfall ist sowohl der innere Kardanhalter 210 der mittelgroßen Kardanvorrichtung 100 als auch der äußere Kardanhalter 220 dieser Kardanvorrichtung jeweils in zwei Kardanvorrichtungen unterschiedlicher Baugröße dieser Familie verwendbar. Die Vielfalt an möglichen Baugrößen von Kardanvorrichtungen ist also größer als die zu deren Aufbau benötigte Anzahl von Kardanhaltern unterschiedlicher Baugrößen. Diese Standardisierung senkt die Kosten, ermöglicht eine vereinfachte Beschaffung der Bauelemente, insbesondere der Leichtbau-Kardanhalter, und reduziert zudem die betrieblichen Durchlaufzeiten im Sinne der Lieferzeiten gegenüber den Endkunden. Jede der Kardanvorrichtungen erhält dabei die durch Verwendung von Leichtbauwerkstoffen erzielbaren Vorteile, die sich auch in der Qualität der bearbeiteten Werkstücke niederschlägt.

Die ringförmigen Komponenten, die auch in unterschiedlichen Formen (zum Beispiel quadratische Form oder runde Form) vorliegen können, können hierbei kombiniert werden und durch den flexiblen Zusammenbau können auch Höhendifferenzen von Kundenbauteilen gegebenenfalls den Anforderungen beim Honprozess angepasst werden. Ein Kardanhalter kann z.B. als Wendeteil ausgestaltet sein, das in unterschiedlichen Orientierungen verwendet werden kann. Bei der Werstückhaltevorrichtung 500 sind die Kardanhalter 510 und 520 nominell weitgehend identisch zu den Kardanhaltern 210 und 220 der Werstückhaltevorrichtung 100, haben also insbesondere die gleichen Dimensionen. Die zweite Kardanachse 522 liegt aber tiefer als die zweite Kardanachse 222, weil die zugehörigen Lagerbolzen in untere Lagerbohrungen eingesetzt sind.

Die Schnittstelle zum zu bearbeitenden Werkstück, also der Werkstückhalter, kann ebenfalls auf Standardbohrbilder reduziert werden, so dass auch verschiedene Kundenbauteile in einfache Werkstückhalter zentrumsnah eingebracht werden können.

## Patentansprüche

1. Werkstückhaltevorrichtung mit
einer Kardanvorrichtung (200) zur Aufnahme eines Werkstückhalters, der mittels der Kardanvorrichtung um zwei zueinander senkrechte Kardanachsen (212, 222) schwenkbar ist,
wobei die Kardanvorrichtung einen ersten Kardanhalter (210) aufweist, welcher gegenüber einer Lagereinrichtung (120) der Werkstückhaltevorrichtung um eine erste Kardanachse (212) schwenkbar ist und einen zweiten Kardanhalter (220) trägt, der gegenüber dem ersten Kardanhalter (210) um eine senkrecht zur ersten Kardanachse ausgerichtete zweite Kardanachse (222) schwenkbar ist,
**dadurch gekennzeichnet,**
**dass** der erste Kardanhalter und/oder der zweite Kardanhalter mindestens eine Komponente (215, 225) aufweist, die unter Verwendung eines Faserverbundwerkstoffs hergestellt ist.

2. Werkstückhaltevorrichtung nach Anspruch 1, **dadurch gekennzeichnet, dass** der Faserverbundwerkstoff ein carbonfaserverstärkter Kunststoff (CFK) oder ein glasfaserverstärkter Kunststoff (GFK) ist.

3. Werkstückhaltevorrichtung nach Anspruch 1 oder 2, **dadurch gekennzeichnet, dass** die unter Verwendung eines Faserverbundwerkstoffs hergestellte Komponente (215) einen Kern (216) geringer Massendichte aufweist, der durch eine Hülle (217) aus Faserverbundwerkstoff umschlossen ist.

4. Werkstückhaltevorrichtung nach Anspruch 3, **dadurch gekennzeichnet, dass** der Kern (216) im Wesentlichen aus einem druckstabilen Leichtmaterial besteht, in welchem Hohlräume eingeschlossen sind.

5. Werkstückhaltevorrichtung nach einem der Ansprüche 1 bis 4, **dadurch gekennzeichnet, dass** die unter Verwendung eines Faserverbundwerkstoffs hergestellte Komponente (215) des ersten Kardanhalters (210) und/oder die unter Verwendung eines Faserverbundwerkstoffs hergestellte Komponente (225) des zweiten Kardanhalters (220) als geschlossener Ring ausgebildet ist.

6. Werkstückhaltevorrichtung nach einem der Ansprüche 1 bis 5, **dadurch gekennzeichnet, dass** der erste Kardanhalter (210) und/oder der zweite Kardanhalter (220) als geschlossener Ring ausgebildet ist.

7. Werkstückhaltevorrichtung nach Anspruch 5 oder 6, **dadurch gekennzeichnet, dass** der Ring (215, 225) eine im Wesentlichen polygonale Gestalt aufweist, insbesondere eine im Wesentlichen quadratische Gestalt.

8. Werkstückhaltevorrichtung nach Anspruch 5, 6 oder 7, **dadurch gekennzeichnet, dass** der Ring mehrere in Umfangsrichtung gerade Abschnitte aufweist, die an Eckbereichen in benachbarte gerade Abschnitte übergehen, wobei an einander gegenüberliegenden geraden Abschnitten Lagerelemente (270) angeordnet sind, die den Ort und Verlauf der Kardanachsen (212, 222) definieren.

## Claims

1. Workpiece holding device, comprising
a cardan device (200) for receiving a tool holder which is pivoting about two mutually perpendicular cardan axes (212, 222) by means of the cardan device,
wherein the cardan device includes a first cardan holder (210) which is pivoting about a first cardan axis (212) in relation to a bearing device (120) of the workpiece holding device and supports a second cardan holder (220) which is pivoting about a second cardan axis (222), oriented perpendicular to the first cardan axis, in relation to the first cardan holder (210),
**characterized in that**
the first cardan holder and/or the second cardan holder include at least one component (215, 225) which is produced using a fibrous composite material.

2. Workpiece holding device according to claim 1, **characterized in that** the fibrous composite material is a carbon fibre-reinforced plastic (CRP) or a glass fibre-reinforced plastic (GRP).

3. Workpiece holding device according to claim 1 or 2, **characterized in that** the component (215) produced using a fibrous composite material includes a core (216) of low mass density, which core is enclosed by a sheath (217) made of fibrous composite material.

4. Workpiece holding device according to claim 3, **characterized in that** the core (216) is composed essentially of a pressure-resistant light-weight material, wherein voids are enclosed.

5. Workpiece holding device according to any of the claims 1 to 4, **characterized in that** the component (215) produced using a fibrous composite material of the first cardan holder (210) and/or the component (225) produced using a fibrous composite material of the second cardan holder (220) is formed as a closed ring.

6. Workpiece holding device according to any of the claims 1 to 5, **characterized in that** the first cardan holder (210) and/or the second cardan holder (220) is formed as a closed ring.

7. Workpiece holding device according to claim 5 or 6, **characterized in that** the ring (215, 225) has an essentially polygonal shape, in particular an essentially square shape.

8. Workpiece holding device according to claim 5, 6 or 7, **characterized in that** the ring has multiple straight sections in the circumferential direction, which sections, in corner areas, transition into adjacent straight sections, wherein on mutually opposite straight sections bearing elements (270) are disposed which define the location and orientation of the cardan axes (212, 222).

## Revendications

1. Dispositif de support de pièce comprenant
un dispositif à cardan (200) destiné à recevoir un support de pièce, qui est pivotable au moyen du dispositif à cardan autour de deux axes de cardan (212, 222) perpendiculaires l'un à l'autre,
le dispositif à cardan comprenant un premier support de cardan (210), qui est pivotable par rapport à une structure de palier (120) du dispositif de support de pièce autour d'un premier axe de cardan (212), et portant un deuxième support de cardan (220), qui est pivotable par rapport au premier support de cardan (210) autour d'un deuxième axe de cardan (222) orienté perpendiculairement au premier axe de cardan, **caractérisé en ce que**
le premier support de cardan et/ou le deuxième support de cardan comprennent au moins un composant (215, 225), qui est fabriqué en utilisant un matériau composite fibreux.

2. Dispositif de support de pièce selon la revendication 1, **caractérisé en ce que** le matériau composite fibreux est une matière plastique renforcée par des fibres de carbone (CFK) ou une matière plastique renforcée par des fibres de verre (GFK).

3. Dispositif de support de pièce selon la revendication 1 ou 2, **caractérisé en ce que** le composant (215) fabriqué en utilisant un matériau composite fibreux comprend un noyau (216) de densité massique plus faible, qui est entouré par une enveloppe (217) en matériau composite fibreux.

4. Dispositif de support de pièce selon la revendication 3, **caractérisé en ce que** le noyau (216) est essentiellement constitué par un matériau léger stable à la pression, dans lequel des cavités sont incluses.

5. Dispositif de support de pièce selon l'une quelconque des revendications 1 à 4, **caractérisé en ce que** le composant (215) du premier support de cardan (210) fabriqué en utilisant un matériau composite fibreux et/ou le composant (225) du deuxième support de cardan (220) fabriqué en utilisant un matériau composite fibreux sont configurés sous la forme d'un anneau fermé.

6. Dispositif de support de pièce selon l'une quelconque des revendications 1 à 5, **caractérisé en ce que** le premier support de cardan (210) et/ou le deuxième support de cardan (220) sont configurés sous la forme d'un anneau fermé.

7. Dispositif de support de pièce selon la revendication 5 ou 6, **caractérisé en ce que** l'anneau (215, 225) présente une forme essentiellement polygonale, notamment une forme essentiellement quadratique.

8. Dispositif de support de pièce selon la revendication 5, 6 ou 7, **caractérisé en ce que** l'anneau comprend plusieurs sections droites dans la direction de la périphérie, qui sont en continuité avec des sections droites voisines au niveau de zones d'angle, des éléments paliers (270) étant agencés au niveau de sections droites opposées les unes des autres, qui définissent l'emplacement et le tracé des axes de cardan (212, 222).
